# EUROPEAN PATENT APPLICATION

(11) **EP 1 156 663 A2**
(43) Date of publication of application: **21.11.2001**
(21) Application number: 01111769.4
(22) Date of filing: 15.05.2001
(51) Int. Cl.: H04N 1/40

(54) **Image forming system**

(30) Priority: 19.05.2000 JP 2000148533; 23.05.2000 JP 2000151735
(71) Applicant: KONICA CORPORATION, Tokyo (JP)
(72) Inventor: Niitsuma, Tetsuya, Konica Corporation, Hachioji-shi, Tokyo, 192-0032 (JP); Tanaka, Kazuyoshi, Konica Corporation, Hachioji-shi, Tokyo, 192-0032 (JP)
(74) Representative: Henkel, Feiler, Hänzel

(57) **Abstract**

An image forming system includes an image forming apparatus having: an image reading device for reading a document and converting it into the image data; a function selection device which can select a desired image processing function by the operator who operates the image reading device; the first image processing device for conducting the image processing on the image data read out by the image reading device; a read out data transferring device for transferring the image data read out by the image reading device onto the network; an image forming device for forming an image according to the image processed image data; and a controller for controlling the image processing and the image formation according to the function selection device. The image forming system further includes an image processing apparatus connected to the network, having: the second image processing device for processing the image data transferred by the read out data transferring device; a writing data transferring device for transferring the image data processed by the second image processing device onto the network The controller transfers the image data to the image processing apparatus connected to the network by the read out data transferring device according to the image processing function selected by the function selection device, and conducts the second control to transfer the image data processed by the second image processing device to the image forming apparatus by the writing data transferring device.

## Description

### BACKGROUND OF THE INVENTION

The present invention relates to an image forming system.

Heretofore, an image forming apparatus such as a digital copier having an image reading means for reading an image from a document in which the image is recorded, and for outputting it as the image data, and an image forming means for forming the image onto a recording sheet according to the image data from this image reading means, is well known.

In such the image forming apparatus, the simple image processing such as trimming is conducted on the image data read out by the image reading means, and the image forming means can conduct the image formation according to the image data on which the image processing is conducted.

Further, heretofore, an image forming system for use in a network circumstance is provided.

This image forming system is structured by connecting, for example, the image forming apparatus such as the digital copier, and the information processing apparatus such as a personal computer to direct the scanning (reading) or printing (print) of the image to the image forming apparatus, or a work station, with each other by the network. Further, the structure in which a plurality of image forming apparatus or a plurality of information processing apparatus are connected to the network, may also be applicable.

In such the image forming system, for example, a method for use as a scanner mode by which the reading out of the image is directed from the information processing apparatus to the image forming apparatus, and the image read out by the image forming apparatus is transferred to the information processing apparatus, is well known.

In the conventional image forming system, for example, the image data of the image read out in this scanner mode by the image forming apparatus is transferred to the information processing apparatus, and in the information processing apparatus by which the image data is received, the image file can be stored in a hard disk as it is, or the image file is transferred to the image forming apparatus at need and the image formation can be conducted.

However, in the conventional image forming apparatus such as the digital copier, or image forming system, there are following problems.

That is, when the image forming apparatus such as the digital copier is used in a single body, as described above, only the simple image processing can be conducted on the image data of the image read out by the image reading means.

This is for the reason of the limitation of the function of the image forming apparatus, and to provide various image processing functions other than the basic function of the image forming apparatus brings an increase of the cost, because it becomes a special dedicated apparatus unless this image processing function is used by many persons, and to provide various image processing functions to the image forming apparatus, in itself, is also a cause of an increase of the cost.

Further, in the case of the image forming system in which the information processing apparatus and the image forming apparatus are connected by the network, it can be considered that the image data of the image read out by the image forming apparatus is transferred to the information processing apparatus and various image processing are conducted in the information processing apparatus, however, in this case, it is necessary that the operator operates the image forming apparatus at the position at which the image forming apparatus is installed, and conducts the reading-out of the image, and then, the operator moves to a position at which the information processing apparatus is installed and operates the information processing apparatus and conducts the image processing. That is, there is a problem in that the processing is troublesome and the operability is not so good.

Further, the present invention relates to the image forming system, and particularly to the image forming system having the image forming apparatus and the information processing apparatus, by which the image data is transferred between mutual apparatus.

In the above image forming system, the image forming apparatus and the information processing apparatus can conduct, for example, the mutual transfer of the image data, and when a plurality of image forming apparatus or a plurality of information processing apparatus are connected to the network, the data transfer can also be conducted between these image forming apparatus themselves or information processing apparatus themselves.

In order to use the image forming apparatus in such the image forming system, other than the conventional basic function as the image forming apparatus, that is, a function to conduct the image reading or image formation, the network function which is connected to the network and conducts the data transfer, is necessary.

In order to realize such the basic function as the image forming apparatus and the network function, conventionally, the processing of respective functions is conducted by the different CPUs.

Further, in the image forming system used in the above network circumstance, the communication between mutual apparatus connected to the network is conducted by a serial communication by using one signal line, and only after the transfer of a series of data has been completed, the transmission of the other data or control commands can be conducted.

Further, an amount of the image data processed in the image forming system is increased as the increase of the resolving power. In the network circumstance, when a large amount of data is transferred, the transferring time is a large problem. Accordingly, in the conventional image forming system, it is considered that the image data is compressed and transferred.

However, in the above image forming system, there are following problems.

Initially, as in the conventional image forming system, when the basic function as the image forming apparatus and the network function are processed by respective different CPUs, there is a problem in that the mutual arbitration between processing conducted by respective CPUs is complicated and difficult.

That is, the above basic function and the network function can not independently exist, and for example, even when it is considered that the image data read out by the image reading function which is one of basic functions, is transmitted to the network by the network function, it can be seen that both functions do not have entirely no relationship with each other. Other than this, although the various arbitration is necessary between both functions in order to realize complicated processing without any contradiction, there is a problem in that, because, conventionally, these both functions are processed by respectively separated CPUs, processing is more complicated, and I/O is also complicated.

Accordingly, it is considered that the CPU of the image forming apparatus is made to one, and by this one CPU, both functions of the basic function and the network function are processed. However, in this case, for example, while the copy processing is conducted, when the data is transferred through the network, the processing capacity of the CPU is distributed to both processing, and the processing capacity of the basic function is lowered as compared to the case where only the basic function is processed. In the image forming apparatus such as a digital copier, there is sometimes a case in which its capacity is expressed by a numeric value of how many sheets of copy can be obtained per 1 minute, and although this is a predetermined essential specification, when both functions of the basic function and the network function are simply processed by one CPU, this specification can not be maintained, and there is a problem in that even a case can also occur in which a fault such as a sheet jam happens according to the circumstances.

Further, as in the conventional image forming system, in the case where only after the transfer of a series of data has been completed, the transmission of the other data or control commands can be conducted, even when, for example, the control command by which it is desired to urgently stop the transfer of the data, is tried to send during the data transfer, the control command can not be sent when the transfer of the data has not been completed, and there is a problem in that the system can not cope with the urgent processing. Accordingly, for example, even when the operator of the image forming apparatus desires to stop the transfer processing of the data during the data transfer, the system can not quickly cope with it, and the response of the system is not so good when viewed from the operator side.

Further, although it is preferable that the image data is compressed and transmitted when the shortening of the transfer time of the image data is considered, in this case, when it is necessary that the receiver side peruses the received image data, the extension processing to restore the received image data is necessary, and it is necessary that the function to conduct the extension processing is provided in the apparatus on the receiver side, and there is a problem in that the system is short of the general purpose property. Further, even when the image data is compressed, there is also a case where the data amount is not so much changed, and in such the case, although the data transfer time is not reduced, because the time period for the compression and the extension processing of the image data is necessary, there is a problem in that it takes a useless time.

In contrast to this, when the image data is not compressed and transferred, because of the plenty of the data amount, there is a problem in that it takes a lot of transfer time, and even when the data is stored in the memory, there is a problem in that a large memory capacity is consumed.

As described above, there are merits and demerits when the image data is compressed and when the image data is not compressed, and conventionally, the optimum system can not be provided.

### SUMMARY OF THE INVENTION

The present invention is attained in view of the above problems, and the first object of the present invention is to provide an image forming system which can be easily operated and by which arbitrary image processing can be conducted when various image processing are conducted on the data obtained by reading the document image.

The present invention is attained in view of the above problems and in an image forming system structured by connecting the image forming apparatus and the information processing apparatus by a network, the second object of the present invention is to provide an image forming system which is easily operated, without lowering the specification of the processing capacity of the image forming apparatus, and by increasing the response and the general purpose property of the system.

The above objects can be attained by the following Structures 1 and 2.

(Structure 1). An image forming system structured by (a) an image forming apparatus and (b) an image processing apparatus connected to the network, and the image forming apparatus having the following: an image reading means for reading a document and converting it into the image data; a function selection means which can select a desired image processing function by the operator who operates the image reading means; the first image processing means for conducting the image processing on the image data read out by the image reading means; a read out data transferring means for transferring the image data read out by the image reading means onto the network; an image forming means for forming an image according to the image processed image data; and a control means for controlling the image processing and the image formation according to the function selection means; and the image processing apparatus having the following: the second image processing means for processing the image data transferred by the read out data transferring means; a writing data transferring means for transferring the image data processed by the second image processing means onto the network, wherein the control means transfers the image data to the image processing apparatus connected to the network by the read out data transferring means according to the image processing function selected by the function selection means, and conducts the second control to transfer the image data processed by the second image processing means to the image forming apparatus by the writing data transferring means.

(Structure 2). An image forming apparatus which can be connected onto the network and has the following: an image reading means for reading a document and converting it into the image data; a function selection means which can select a desired image processing function by the operator operating the image reading means; the first image processing means for conducting the image processing on the image data read out by the image reading means; a reading data transferring means for transferring the image data read out by the image reading means onto the network; an image forming means for forming the image according to the image processed image data; and a control means for controlling the image processing and image formation according to the function selection means, wherein the control means conducts the second control to transfer the image data onto the network by the reading data transferring means, to direct the image processing, and to receive the image data after the image processing, according to the image processing function selected by the function selection means.

Further, in order to attain the above first object, the present invention comprises: an image reading means for reading a document and converting it into the image data; the first image processing means for processing the image data read out by the image reading means; a reading data transferring means for transferring the image data read out by the image reading means; the second image processing means for processing the image data transferred by the reading data transferring means; a writing data transferring means for transferring the image data processed by the second image data processing means; an image output means which selects either one of the image data processed by the first image processing means or the image data transferred by the writing data transferring means and which can output it as an image; and a control means by which the operator operating the image reading means controls whether the operator causes the first image processing means to process the image data, according to a function selection means for selecting a desired image processing function and the function selected by the function selection means, or whether the operator causes the reading data transferring means to transfer the image data to the second image processing means, and causes the second image processing means to process the image data, and causes the writing data transferring means to transfer the data.

Further, the present invention is characterized in that the second image processing means conducts the image processing by software.

Further, the present invention is characterized in that the function selection means communicates with the second image processing means, and obtains the function information which can be processed by the second image processing means, and presents it to the operator as a selectable function.

Further, the present invention is characterized in that the reading data transferring means and the writing data transferring means is equipped with an E-Mail on the Internet or ftp or http protocol.

Further, the present invention is characterized in that the image data converted by the image reading means is the multi-valued luminance data.

Further, the present invention is characterized in that the image data converted by the image reading means is the compression data.

In order to attain the second object, the present invention is characterized in that, in the image forming system structured by connecting the image forming apparatus with the information processing apparatus by the network, the priority is provided in the processing conducted by the image forming apparatus, and it is controlled that, while the processing with the higher priority is conducted, the other processing with the lower priority is not conducted.

Further, the present invention is characterized in that the processing by which the priority is provided is in the processing of the basic function and the processing of the network function, and the priority of the processing of the basic function is set higher than that of processing of the network function.

Further, the present invention is characterized in that the processing of the basic function and the processing of the network function are controlled and conducted by a single central processing unit CPU.

Further, the present invention is characterized in that the priority can be arbitrarily changed.

Further, the present invention is characterized in that, in the image forming system structured by connecting the image forming apparatus with the information processing apparatus by the network, the data transferred through the network has an area showing a logical channel different depending on the kind of the data.

Further, the present invention is characterized in that, in the image forming system structured by connecting the image forming apparatus with the information processing apparatus by the network, the image forming apparatus is provided with a compression selection means which can select whether the data is transferred by being compressed, or uncompressed, when the data is transferred through the network.

### BRIEF DESCRIPTION OF THE DRAWINGS

Fig. 1 is a block diagram showing the structure of the first embodiment of an image forming system according to the present invention.
Fig. 2 is a block diagram showing the structure of a digital copier shown in Fig. 1.
Fig. 3 is a block diagram showing the structure of the second embodiment of the image forming system according to the present invention.
Figs. 4(a) and 4(b) are views showing an outline of a data format of the data transferred between the digital copier shown in Fig. 3 and a personal computer, and Fig. 4(a) is a view showing the outline of the data format when the image data is transferred, and Fig. 4(b) is a view showing the outline of the data format when the control command is transferred.

### DETAILED DESCRIPTION OF THE PREFERRED EMBODIMENT

Referring to the drawings, the first embodiment of the present invention will be described below. In this connection, in the present embodiment, a digital copier is shown as an example of the image forming apparatus, and an image forming system structured by connecting the digital copier with an information processing apparatus, that is, a personal computer which is an example of an image processing server, by the network will be described. The image processing server is not limited to a personal computer, but, for example, a work station or the other large size host computer may also be allowable.

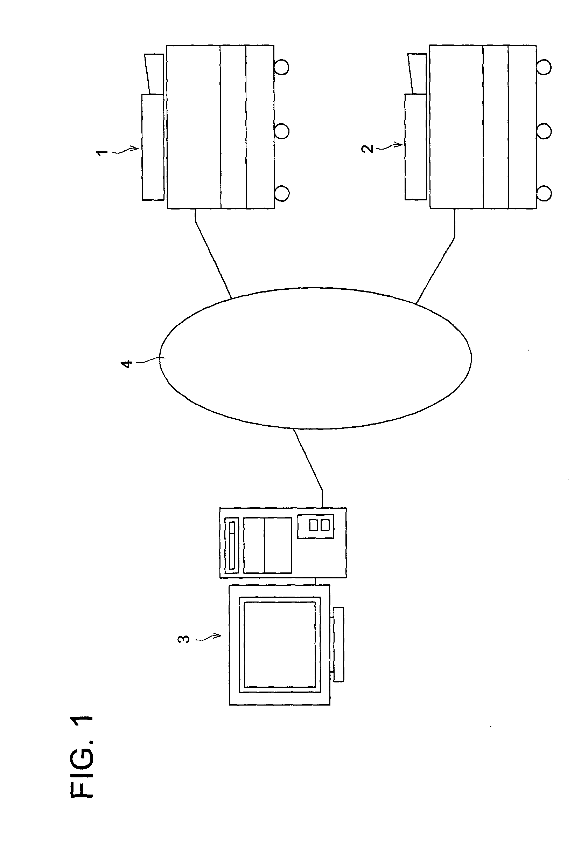

Fig. 1 is a block diagram showing the structure of the first embodiment of an image forming system according to the present invention.

In the present embodiment, the image forming system is structured by having two digital copiers of the digital copiers 1 and 2. Each of the two digital copiers 1 and 2 can individually read out a document (scan) and form an image (print), and other than that, by being connected to the network, for example, an image read out by the digital copier 1 is transferred to the digital copier 2, and the image is formed by the digital copier 2, or its reversal processing is possible. That is, the image read out by digital copier 1 or 2 is transferred to the other apparatus through a network 4, and the image received from the other apparatus through the network 4 can also be formed by the digital copier 1 or 2.

Further, in the present embodiment, the system is structured such that a personal computer 3 is also connected to the network 4. This personal computer 3 can conduct the predetermined image processing on the image data received from the digital copier 1 or 2, and returns it to the transmitting point. Further, for example, it may also be allowable even though the system is structured such that the predetermined image processing is conducted on the image data received from the digital copier 1, and the processed image data can be returned to the digital copier 2 which is different from the transmitting point.

In Fig. 1, the network 4 may also be any network like, for example, the LAN such as the Ethernet or Token-ring , or other than that, the Internet. In each of apparatus connected to the network 4, an address on the network is previously set, and each apparatus is discriminated by this address, and communicates with the other apparatus connected to the network 4.

In this connection, in Fig. 1, although the numerical relationship of the personal computer, that is, the image processing server and the digital copier, that is, the image forming apparatus, is 1 to a large number, it is of course that this may also be a large number to 1, or a large number to a large number.

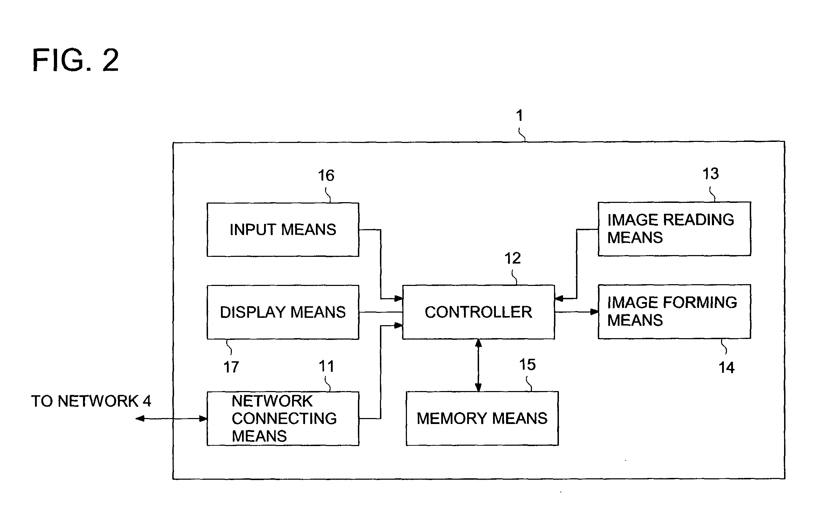

Fig. 2 is a block diagram showing the structure of the digital copier 1 shown in Fig. 1.

Because both of the digital copiers 1 and 2 have the same structure, herein, the digital copier 1 will be described as the representative below.

The digital copier 1 is structured by having: a network connection means 11 which is an interface with the network 4 shown in Fig. 1; a control means 12 for controlling the operations of the whole digital copier 1; an image reading means 13 for reading out an image from a document; an image forming means 14 for forming the image on, for example, paper; a memory means 15 for storing the image data read out by the image reading means 13 or other than that, parameters necessary for operations of the digital copier 1; an input means 16 for inputting the operations and directions of the user to the digital copier 1; and a display means 17 for displaying the various information for the operator.

Next, operations of the first embodiment will be described.

Initially, the operator presses an application function button (not shown) provided in the input means 16 of the digital copier 1 at the installation position of the digital copier 1. The digital copier 1 whose application function button is pressed communicates with the personal computer 3 by using a predetermined address on the network through the network 4, and obtains a list of the image processing functions which can be presented by the personal computer 3, and display the list on the display means 17. The operator selects a desired image processing function from the list displayed on the display means 17, and inputs it.

When the digital copier 1 asks the image processing functions which can be presented, to the personal computer 3, the address of the digital copier 1 itself on the network may also be transmitted to the personal computer 3. In this manner, the address of the distant apparatus to which the list of the image processing functions which can be presented by the personal computer 3 itself, is transmitted, is found, and it is not necessary that the digital copier 1 is previously registered in the personal computer 3.

As the image processing functions which can be presented by the personal computer 3, for example, a fair copy function, inclination correction function, dirt removal function, or font conversion function is listed, but, other than that, it is of course that all of image processing functions are included.

In this connection, herein, when the application function button is pressed, the digital copier 1 communicates with the personal computer 3, and receives the list of the image processing functions which can be presented by the personal computer 3, from the personal computer 3, however, the present invention is not limited to this, but, it may also be allowable that the list of the image processing functions which can be presented by the other apparatus, is previously registered and held in the memory means 15, and when the application function button is pressed, the list previously registered and held in the memory means 15, is displayed.

Further, a plurality of image processing servers such as the personal computer 3 are connected to the network 4, and a list of the image processing functions which can be presented by any one of the plurality of image processing servers, may be displayed and the operator may also select it.

Further, the operator may also select any one of the plurality of the image processing servers, that is, the operator may also select the image processing server itself. Even in the case where the operator selects the image processing sever itself, the digital copier 1 searches the image processing severs connected to the network 4, and displays its list, and the operator may selects the server from the list, or the list of the image processing servers connected to the network 4 is previously registered and held in the memory means 15, and the list previously registered and held in the memory means 15 is displayed, and the operator may select the server from the list.

Further, when the digital copier 2 can present the image processing function different from the digital copier 1, also the digital copier 2 can become the image processing server.

Further, as the communication method of the digital copier 1 with the imager processing server, it is of course that any method such as the so-called E-Mail or ftp protocol or http protocol, can be applied.

Next, the operator who selects the image processing function, uses the digital copier 1, and conducts the normal copy operation. That is, the operator sets a document to the digital copier 1, and presses the copy start button provided in the input means 16 of the digital copier 1.

Then, in the digital copier 1, the image recorded in the document is optically read out by the image reading means 13, and the image data is obtained, and the image data is compressed by a predetermined compression method and stored in the memory means 15. Any compression method may be applicable for this compression method.

Next, when, as described above, the application function button is pressed and the image processing function by the other apparatus is selected, the digital copier 1 transmits the image data compressed and stored in the memory means 15 to the personal computer 3 which presents the image processing function selected by the operator. At this time, also the information what is the image processing function selected by the operator, is transmitted to the personal computer 3, and the image processing to be conducted in the personal computer 3 is designated.

Further, when the image data is transmitted to the personal computer 3, the digital copier 1 may also transmit the address of the copier itself on the network, together with the image data. According to this, the address of the distant apparatus to be returned after the designated image processing is conducted on the image data received by the personal computer 3, is found, and it is not necessary to previously register the digital copier 1 in the personal computer 3.

In the personal computer 3 which received the compressed image data, the received image data is extended, and compressed again after the designated image processing is conduced, and returned to the digital copier 1.

In the digital copier 1 to which the image data is returned from the personal computer 3, the received image data is stored in the memory means 15, and according to the image data, the image formation is conducted by the image forming means 14.

As described above, according to the present embodiment, the operator can utilize various image processing functions by a simple operation without moving each time from the installation position of the digital copier 1 to installation position of the personal computer 3. Particularly, when the personal computer 3, that is, the image processing server is placed at a remote position separated from the digital copier 1, the effect of the image forming system according to the present embodiment is prominent.

In this connection, in the above embodiment, although when the image processing function of the personal computer 3 is utilized, the image processing function of the digital copier 1 is not used, the present invention is not limited to this, but, after any image processing is conducted by the digital copier 1, the image data is transferred to the personal computer 3 and the image processing is further conducted, and further, any image processing may be conducted again also on the image data returned from the personal computer 3 by the digital copier 1.

Further, in the digital copier 1, normally, although the image of the document is optically read out by the image reading means 13 and the luminance data of the image is obtained, and the luminance - density conversion processing is conducted on this data in the control means 12 and the density data of the image is obtained, and according to the density data, the image formation is conducted by the image forming means 14, the image data transmitted from the digital copier 1 to the personal computer 3, in order to conduct the image processing in the personal computer 3, may also be this luminance data or density data, and further, other type of data.

Further, the OCR (character recognition) function is provided in the digital copier 1, and the read out image data is converted into the text data, and this is transmitted to the personal computer 3, and after any processing is conducted in the personal computer 3, the data may be returned to the digital copier 1, or the OCR (character recognition) function is provided in the personal computer 3, and the image data read out by the digital copier 1 is transmitted to the personal computer 3, and after the image data is converted into the text data, the data may be returned to the digital copier 1.

Further, in the above embodiment, although the image data is transmitted from the digital copier 1 to the personal computer 3, and after any image processing is conducted in the personal computer 3, the data is returned to the digital copier 1, the present invention is not limited to this, but, the data may not be returned from the personal computer 3 to the digital copier 1. For example, the OCR function is provided in the digital copier 1, and the read out image data is converted into the text data, and by transmitting this to the personal computer 3, the E-Mail function can be realized, or by simply transmitting the image data from the digital copier 1 to the personal computer 3, the FAX function can be realized.

Further, in the above embodiment, in the digital copier 1, although the read out image data is temporarily stored in the memory means 15, it is not always necessary, but, the read out image data is not stored in the memory means 15, and may be transmitted to the personal computer 3.

Further, in the image forming system of the present invention, it is needless to say that the compression and extension are not indispensable.

Further, the image processing function conducted in the personal computer 3, that is, the image processing server, may be realized by a software processing, or may be realized by the hardware processing such as a dedicated hardware accelerator.

As described above, according to the first embodiment, so much complicated image processing as the image forming apparatus single body such as the digital copier can not have, can be conducted by a simple operation, and further, this image data which is image-processed, can be printed.

Further, according to the above embodiment, because, without conducting the hardware development whose turn-around (TAT) is long, the new image processing function can be installed, the customization or version up of the function becomes easy. Further, abundant functions can be presented.

Further, according to the above embodiment, because the image forming apparatus can acquire the function information which can be processed, by communicating with the image processing server, there is an effect that, by only changing the processing function of the image processing server, the increase of the function as the image forming system can be attained. This is a very important effect in the case in which, for example, the digital copier owned by the user utilizes the processing function of the image processing server on the Internet, which is presented by the manufacturer.

Further, according to the above embodiment, although the communication of the image forming apparatus with the image processing server is conducted by the E-Mail or ftp protocol or http protocol, because this E-Mail, or ftp protocol or http protocol can easily go over the fire-wall, the setting of the network of the user becomes easy.

Further, according to the above embodiment, in the image processing server, because, as the image data, the not-processed multiple-valued luminance data can be used, the more abundant image processing functions can be presented in the image processing server.

Further, according to the above embodiment, because the compressed data is transferred between the image forming apparatus and the image processing server, there is an effect that the transfer time can be shortened, and it is preferable for the security.

Further, according to the above embodiment, when the data is transferred between the image forming apparatus and the image processing server, because the temporarily stored data is transferred, there is an effect that the image can be transferred without depending on the transfer speed of the transfer path.

Further, for example, when a plurality of image forming apparatus commonly uses the image processing function of one image processing server, there is an effect that the cost can be reduced.

As described above, according to the present invention, when various image processing are conducted on the image data obtained by reading the image of the document, the image forming system by which an arbitrary image processing can be conducted with the good operability, can be provided.

Referring to the drawings, the second embodiment of the present invention will be described below. In this connection, in the present embodiment, a case where the image forming apparatus is the digital copier, and the information processing apparatus is the personal computer, will be described. In this connection, the present invention is not applied for only the case where the image forming apparatus communicates with the information processing apparatus, but the present invention is applied also for a case where the image forming apparatus communicates with the other image forming apparatus.

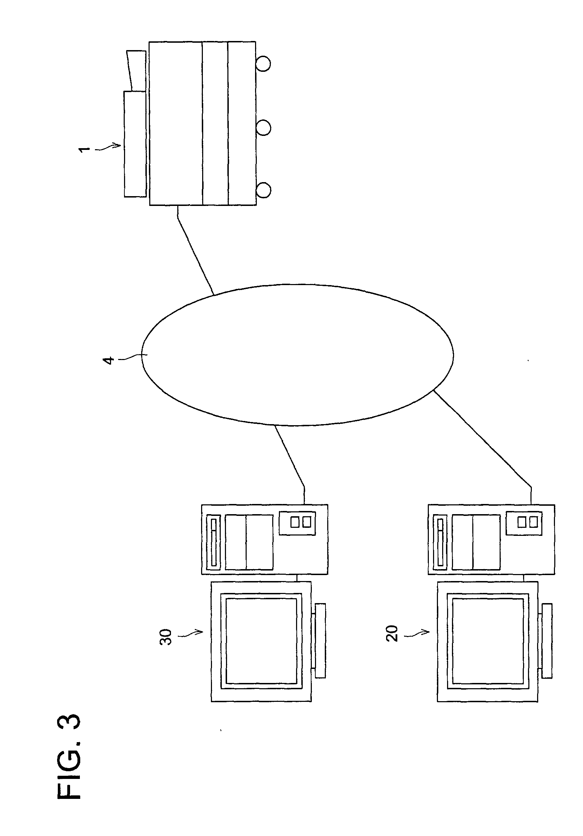

Fig. 3 is a block diagram showing the structure of the second embodiment of the image forming system according to the present invention.

The present embodiment is structured by having the digital copier 1 as the image forming apparatus. This digital copier 1 can independently conduct the reading out (scanning) of the document and image formation (printing), and other than that, by being connected to the network 4, the image read out by the digital copier 1 can be transferred to the other apparatus through the network 4, or the image received from the other apparatus through the network 4 can be image formed by the digital copier 1.

Further, in the present embodiment, the personal computers 20 and 30 are connected to the network 4. These personal computers 20 and 30 can direct the digital copier 1 to conduct the reading out of the image, formation of the image, and transfer of the image. Further, the image held in the personal computers 20 and 30 can be transferred to the digital copier 1 and image formed by the digital copier 1, or the image read out by the digital copier 1 can be transferred to the personal computers 20 and 30, and can also be edited or saved in the personal computers 20 and 30.

In Fig. 1, it may also be allowable that the network 4 is the LAN such as Ethernet, or any other network.

In Fig. 2, the control means 12 is structured by a single central processing unit CPU, and by this single CPU, operations and controls of the whole of the digital copier 1 are conducted.

Next, the operations of the second embodiment will be described.

In the digital copier 1 of the present embodiment, the control means 12 controls so that the basic function of the digital copier and the network function are not simultaneously conducted.

Accordingly, in the present embodiment, when the processing of the basic function is conducted, the processing of the network function is not received. Further, when the processing of the network function is conducted, the processing of the basic function is not received, or when the processing of the basic function is directed while the processing of the network function is conducted, the processing of the network function may be interrupted, and the processing of the basic function may be received and conducted. That is, in the present embodiment, the priority is set to each processing, and according to the priority, the execution, refusal, or interruption of the processing is conducted. It is preferable that this priority can be arbitrarily changed. In this connection, even when the processing of the network is interrupted, as the network, there is no problem because the data is transmitted again.

In this connection, the electronic RDH is known as one of functions of the digital copier. This electronic RDH (Recirculating Document Handler) is a function by which, when it is desired to copy a plurality of pages of documents, the copied recording sheets are arranged in the same order as the order of the original documents and outputted, and for example, it operates such that, when 3 volumes of 4 page documents are copied, the recording sheets for the second page of the documents are not outputted after the 3 sheets of the first page are outputted, but the next 4 page recording sheets for the second volume are outputted after all of 4 pages for the first volume are outputted.

In order to mechanically realize this function, it is necessary that the documents are turned by the number of the copy volumes for scanning, and thereby, the possibility that the document is damaged, is increased, however, in the electronic RDH, all of the pages are scanned only once, and by storing the obtained data in the memory, the copy of a plurality of volumes can be conducted.

For example, in this electronic RDH, it is absolutely necessary that the reading out processing of a plurality pages of documents is completed in a predetermined time, and that is, it is necessary that the processing capacity by which the image reading out of a predetermined number of sheets can be conducted, for example, for 1 minute, is always maintained, and in the digital copier, there exists such the critical processing.

On the one hand, when the digital copier is connected to the network, the data transmitted by the other apparatus at an arbitrary time flows in. For example, when the communication is conducted by a packet, because the packet which is not for the digital copier itself, exists on the network, it is necessary to check in the digital copier whether the packet flowing on the network is for the digital copier itself. Even for such the processing, the processing capacity of the CPU of the digital copier is consumed, and it influences on the critical processing, and there is a possibility that the reading out capacity to conduct the image reading out of a predetermined number of sheets, for example, for 1 minute, can not be exhibited.

Accordingly, in the present embodiment, when the image reading processing by the image reading means 13 or the image forming processing by the image forming means 14 is conducted, the system operates such that the resources of the whole digital copier 1 is not allocated to the network processing by the network connection means 11. Further, as an extreme example, it can be considered that the processing of the network is temporarily perfectly stopped. According to this, there is no flowing of the data from the network 4 into the digital copier 1 absolutely, and when viewed from the other apparatus connected to the network 4, it can be seen as if the digital copier 1 does not exist in the network 4.

Accordingly, in such the case, just before the basic functions such as the image reading processing by the image reading means 13 or the image forming processing by the image forming means 14 are conducted, it is preferable that a massage that the network function can not be used because another processing is conducted from now, is outputted from the digital copier 1 to the other apparatus connected to the network 4. In this manner, for example, when the operator of the personal computer 20 is about to transmit the image data to the digital copier 1, the personal computer 20 can display the message that the image data can not be transmitted now because of another processing, on the display apparatus, and according to this, the operator can know that it is not because of the trouble of the system, that the transmission can not be conducted.

After that, in the present embodiment, when the image reading processing by the image reading means 13 or the image formation processing by the image firming means 14 is completed, the network processing by the network connection means 11 is restarted. When restarted, it is better that the digital copier 1 outputs the message that the processing of the network function is restarted, from the digital copier 1 to the other apparatus connected to the network 4.

According to the present embodiment as described above, there is an effect that, by a single CPU, the processing having the higher priority can be securely conducted with priority, and the load of the network can be controlled.

Next, the format of the data transferred between the digital copier 1 and the personal computers 20 and 30 will be described.

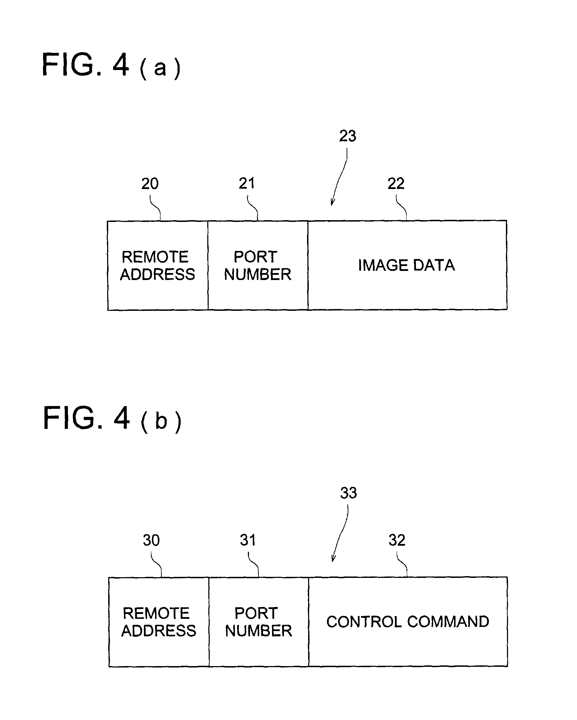

Figs. 4(a) and 4(b) are views showing outlines of the data format of the data transferred between the digital copier 1 shown in Fig. 3 and personal computers 20 and 30, and Fig. 4(a) is a view showing the outline of the data format when the image data is transmitted, and Fig. 4(b) is a view showing the outline of the data format when the control command is transmitted.

As shown in Fig. 4(a), when the image data is transmitted, a packet 23 is structured by having an area 20 in which the address on the network of the distant apparatus is accommodated, an area 21 in which a value showing the port number of the present packet is accommodated, and an area 22 in which the image data is accommodated, and as shown in Fig. 4(b), when the control command is transmitted, a packet 33 is structured by having an area 30 in which the address on the network of the distant apparatus is accommodated, an area 31 in which a value showing the port number of the present packet is accommodated, and an area 32 in which the image data is accommodated.

In areas 21 and 31 of the port number, a value by which it can be identified whether the data transmitted by the packet is the image data or the control command, is accommodated as the port number. For example, in the area 21 of the port number of the packet 23 of the image data, a numeric value 8000 is accommodated, and in the area 31 of the port number of the packet 33 of the control command, a numeric value 8001 is accommodated.

In the present embodiment, the image data and control command are transmitted by the packet format as shown in Fig. 4(a) and Fig. 4(b), and when a data amount of a series of data is large as that of the image data, and all of the series of the data can not be accommodated in one packet, the series of the data is divided and transmitted by a plurality of packets.

According to this, the image data and the control command can be identified by values set in the areas 21 and 31 of the port number. Thereby, even the structure by which the image data and the control command are transmitted by a common serial line, when a logically independent separated channel is allotted for each of different kinds of data, and the data is transmitted in time division, a plurality of kinds of data can be simultaneously transmitted apparently.

Conventionally, the control command can not be transmitted until the transmission of one image data is completed, however, according to the present embodiment, when one image data is divided and transmitted by a plurality of packets, that is, at a timing between times at which a certain packet of the plurality of packets 23 is transmitted and the next packet is transmitted, the packet 33 of the control command can be transmitted, as the result, the control command can be transmitted while one image data is transmitted. Thereby, the effective control can be conducted even during the image data transmission, and the correspondence to the trouble can also be quickly conducted.

Next, the processing relating to the compression of the image data in the second embodiment will be described.

In the digital copier 1 of the present embodiment, a compression means for compressing the image data and a compression selection means for automatically selecting and determining whether the image data is compressed by the compression means and transmitted, or the image data is not compressed and transmitted, are provided in the control means 12. This compression selection means determines according to various conditions whether the image data is compressed and transmitted, or the image data is not compressed and transmitted.

Examples of these conditions will be listed below.
(1) According to the result of the negotiation with the apparatus of the transferring point.
   The digital copier 1 communicates with the apparatus of the transferring point before the image data is transmitted, and the apparatus of the transmission point directs whether the image data is compressed or not, to the digital copier 1 during the communication. In the compression selection means of the digital copier 1, according to this direction, it is selected and determined whether the image data is compressed and transmitted, or the image data is not compressed and transmitted. In the apparatus of the transferring point, the direction content is determined according to the operation input of the operator of the apparatus itself, and directed to the digital copier 1.
(2) According to the result of the negotiation with the apparatus of the transferring point.
   The digital copier 1 communicates with the apparatus of the transferring point before the image data is transmitted, and the apparatus of the transmission point directs whether the image data is compressed or not, to the digital copier 1 during the communication. In the compression selection means of the digital copier 1, according to this direction, it is selected and determined whether the image data is compressed and transmitted, or the image data is not compressed and transmitted. In the apparatus of the transferring point, when the apparatus itself has an extension function to extend the compressed image data, the apparatus directs to compress the image data and transfer it, and when it does not have, the apparatus directs to not compress the image data and transfer it.
(3) According to the operation input of the operator of the digital copier 1.
   The operator of the digital copier 1 selects either one of the compression mode or non-compression mode and inputs it by the input means 16. In the compression selection means of the digital copier 1, according to this input, when the compression mode is selected, the compression selection means determines that the image data is compressed and transferred, and when non-compression mode is selected, it determines that the image data is not compressed and transferred.
(4) According to the data amount before the image data is compressed.
   In the compression selection means of the digital copier 1, when the data amount of the transferred image data is larger than a predetermined data amount, the compression selection means determines that the image data is compressed and transferred, and when the amount is not larger than a predetermined data amount, it determines that the image data is not compressed and transferred.
(5) According to the difference of the data amounts before and after the image data is compressed.
   In the compression selection means of the digital copier 1, when the difference as the result in which the data amount after the compression is subtracted from the data amount before the compression of the transferred image data, is larger than a predetermined value, the compression selection means determines that the image data is compressed and transferred, and when the difference is not larger than a predetermined value, it determines that the image data is not compressed and transferred.
(6) According to the ratio of the data amounts before and after the image data is compressed.
   In the compression selection means of the digital copier 1, when the ratio as the result in which the data amount before the compression is divided by the data amount after the compression, is larger than a predetermined value, the compression selection means determines that the image data is compressed and transferred, and when the ratio is not larger than a predetermined value, it determines that the image data is not compressed and transferred.
(7) According to the default.
   In the compression selection means of the digital copier 1, normally, it is determined as the default that the image data is compressed and transferred, and only when any operation is conducted, it is determined that the image data is not compressed and transferred.
(8) According to the default.
   In the compression selection means of the digital copier 1, normally, it is determined as the default that the image data is not compressed and transferred, and only when any operation is conducted, it is determined that the image data is compressed and transferred.

In this connection, the above conditions (1) to (8) are only examples, and the essence of the present invention exists in a point in which it can selects whether the image data is compressed and transferred, or not compressed and transferred.

As described above, according to the second example, the system can automatically select compression or no-compression depending on various conditions, and the general purpose property of the system can be increased.

Further, according to the present embodiment, because the compression can be conducted when the image data is compressed and its effectiveness is confirmed, the time necessary for processing of compression or extension is considered, and the optimum system can be provided.

As described above, according to the present invention, in the image forming system in which the image forming apparatus and the information processing apparatus are connected by the network, the specification of the processing capacity of the image forming apparatus is not deteriorated, and the answering response is increased, and the general purpose property of the system is increased, thereby, an image forming system having good operability can be provided.

## Claims

1. An image forming system comprising:
(a) an image forming apparatus comprising:
(1) an image reading means for reading a document and converting into image data,
(2) a function selection means for enabling an operator who operates the image reading means to select a desired image processing function,
(3) a first image processing means for image-processing image data read out by the image reading means,
(4) a read-out data transferring means for transferring the image data read out by the image reading means onto a network,
(5) an image forming means for forming an image according to the image-processed image data, and
(6) a control means for controlling an image processing and an image formation according to the function selection means; and
(b) an image processing apparatus connected to the network, comprising:
(1) a second image processing means for processing the image data transferred by the read-out data transferring means, and
(2) a writing data transferring means for transferring the image data processed by the second image processing means onto the network,
wherein the control means transfers the image data to the image processing apparatus connected to the network by the read-out data transferring means according to the image processing function selected by the function selection means, and conducts a second control to transfer the image data processed by the second image processing means to the image forming apparatus by the writing data transferring means.

2. The image forming system of claim 1, wherein the second image processing means conducts an image processing by software.

3. The image forming system of claim 2, wherein the image processing of the second image processing means includes at least one of a fair copy function, an inclination correction function, a dirt removal function, a font conversion function and a character recognition function.

4. The image forming system of claim 1, wherein the control means is capable of conducting a first control to make the first image processing means to process the image data in response to the image processing function selected by the function selection means.

5. The image forming system of claim 1, wherein the image processing apparatus is a computer having a communication function.

6. The image forming system of claim 1, wherein the image processing apparatus is an image forming apparatus having a communication function.

7. The image forming system of claim 1, wherein in the second control, the function selection means communicates with the second image processing means, and obtains function information which can be processed by the second image processing means, and presents to the operator as a selectable function.

8. The image forming system of claim 7, wherein the image forming apparatus further comprises a third data memory means capable of storing information in relation to an image processing function which can be selected by the function selection means, and function information which can be processed by the second image processing means, has been stored in the third data memory means in advance.

9. The image forming system of claim 1, wherein the function selection means comprises a display means capable of displaying a plurality of image processing functions.

10. The image forming system of claim 1, wherein the reading data transferring means and the writing data transferring means employ an E-Mail on the Internet, ftp protocol or http protocol.

11. The image forming system of claim 1, wherein the image data converted by the image reading means is the multi-valued luminance data.

12. The image forming system of claim 1, wherein the image data converted by the image reading means is the compression data.

13. The image forming system of claim 1, wherein the image forming apparatus further comprises a first data memory means for storing the image data for each document processed by the first image processing means.

14. The image forming system of claim 1, wherein the image forming apparatus further comprises a second data memory means for storing the image data processed by the second image processing means.

15. The image forming system of claim 1, further comprising a processing method change means for changing a processing method of the first image processing means according to the function selected by the function selection means.

16. The image forming system of claim 15, wherein when image data is processed by the second image processing means, the processing method change means processes according to the function selected by the function selection means so that the first image processing means regards the image data converted by the image reading means as multiple-valued luminance data.

17. The image forming system of claim 1, wherein the first image processing means comprises data compression processing.

18. The image forming system of claim 1, wherein the second image processing means is commonly used by a plurality of read-out data transferring means.

19. The image forming system of claim 1, wherein the control means communicates with other devices connected to the network on the basis of network addresses.

20. The image forming system of claim 1, wherein when the read-out data transferring means transfers the image data to the image processing apparatus, the read-out data transferring means transfers while adding an address on the network of the read-out data transferring means to the image data.

21. The image forming system of claim 20, wherein the image data processed by the second image processing means is transferred onto the image forming apparatus on the basis of the added address.

22. The image forming system of claim 1, wherein the priority is provided in the processing conducted by the image forming apparatus, and the control means controls so that other processing with a lower priority is not conducted while a processing with a higher priority is conducted.

23. The image forming system of claim 22, wherein the processing by which the priority is provided is in the processing of the basic function and the processing of the network function, and the priority of the processing of the basic function is set higher than that of processing of the network function.

24. The image forming system of claim 23, wherein the processing of the basic function and the processing of the network function are controlled and conducted by a single CPU.

25. The image forming system of claim 22, wherein the priority can be arbitrarily changed.

26. The image forming system of claim 1, wherein the data transferred through the network has an area showing a logical channel different depending on the kind of the data.

27. The image forming system of claim 1, wherein the image forming apparatus further comprises a compression selection means capable of selecting whether data is transferred while being compressed or uncompressed, when the data is transferred through the network.

28. An image forming apparatus capable of being connected to a network, comprising:
(a) an image reading means for reading a document and converting into image data;
(b) a function selection means for enabling an operator who operates the image reading means to select a desired image processing function;
(c) a first image processing means for image processing the image data read out by the image reading means;
(d) a reading data transferring means for transferring the image data read out by the image reading means onto the network;
(e) an image forming means for forming an image according to the image processed image data; and
(f) a control means for controlling an image processing and an image formation according to the function selection means,
wherein the control means conducts a second control to transfer the image data onto the network by the reading data transferring means, to direct the image processing, and to receive the image data after the image processing, according to the image processing function selected by the function selection means.

29. The image forming apparatus of claim 28, wherein the control means is capable of conducting a first control to make the first image processing means to process the image data in response to the image processing function selected by the function selection means.

30. The image forming apparatus of claim 28, wherein in the second control, the function selection means communicates with an image processing apparatus connected to a network, and obtains function information which can be processed by the image processing apparatus, and presents to the operator as a selectable function.

31. The image forming apparatus of claim 30, further comprising a third data memory means capable of storing information in relation to an image processing function which can be selected by the function selection means, and function information which can be processed by the image processing means, has been stored in the third data memory means in advance.

32. The image forming apparatus of claim 28, wherein the function selection means comprises a display means capable of displaying a plurality of image processing functions.

33. The image forming apparatus of claim 28, further comprising a first data memory means for storing the image data for each document processed by the first image processing means.

34. The image forming apparatus of claim 28, wherein the first image processing means comprises means for data compressing processing.

35. The image forming apparatus of claim 28, wherein the control means communicates with image processing apparatus connected to the network on the basis of network addresses.

36. The image forming apparatus of claim 35, wherein when the read-out data transferring means transfers the image data to the image processing apparatus, the read-out data transferring means transfers while adding an address on the network of the read-out data transferring means to the image data.

37. The image forming apparatus of claim 36, wherein the image data processed by the image processing means is transferred onto the image forming apparatus on the basis of the added address.
